# EUROPEAN PATENT APPLICATION

(11) **EP 4 057 093 A1**
(43) Date of publication of application: **14.09.2022**
(21) Application number: 21162186.7
(22) Date of filing: 12.03.2021
(51) Int. Cl.: G05B 23/02, G06N 20/00

(54) **CONDITION MONITORING OF ROTATING MACHINES**

(71) Applicant: ABB Schweiz AG, 5400 Baden (CH)
(72) Inventor: Alkkiomäki, Olli, 00380 Helsinki (FI); Tanila, Teemu, 00380 Helsinki (FI); Siimesjärvi, Joni, 00380 Helsinki (FI)
(74) Representative: Kolster Oy Ab

(57) **Abstract**

To provide a more accurate condition monitoring of a rotating machine both operational data and waveform data on the rotating machine are input to a trained classifying model, which will classify the input data to a normal operation condition or to an abnormal operation condition. The classified operation condition will be output as a current operation condition of the rotating machine. The classifying model has been trained using a plurality of combinations of operational data and waveform data collected in different operation settings.

## Description

The present invention relates to condition monitoring of one or more rotating machines.

### BACKGROUND ART

Condition monitoring enables operators to implement condition-based maintenance instead of time based maintenance schedules (preventive maintenance) or when reacting to a failure (reactive maintenance). The purpose of the condition monitoring is to detect anomalies in operation. An anomaly may indicate a malfunction or aging of a component. When detected early enough, unplanned downtime can be minimized. However, normal operation conditions may vary and thereby cause that anomalies may be indicated too sensitively. That in turn may result to unnecessary downtimes. Hence, a requirement for the condition monitoring is to indicate an anomaly, or an abnormal operation, early enough but not too early.

### SUMMARY

An object of the present invention is to provide a more accurate condition monitoring. The object of the invention is achieved by a method, a computer program product, a computer readable medium, an apparatus and a system which are characterized by what is stated in the independent claims. The preferred embodiments of the invention are disclosed in the dependent claims.

A general aspect of the invention uses in condition monitoring of a rotating machine both operational data and waveform data as input data and a trained self-organizing map. The trained self-organizing map comprises a plurality of nodes, a node indicating either a normal or abnormal operation of the rotating machine. The input data is mapped to one node that will indicate the current operating condition of the rotating machine.

### BRIEF DESCRIPTION OF THE DRAWINGS

In the following, exemplary embodiments will be described in greater detail with reference to accompanying drawings, in which
Figure 1 shows simplified architecture of a system and a block diagram of exemplified equipment;
Figures 2 to 5 are flow chart illustrating examples of functionalities; and
Figure 6 is a schematic block diagram.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments/examples to consist of only those features that have been mentioned and such embodiments may contain also features/structures that have not been specifically mentioned.

The present invention is applicable to any apparatus, system or equipment that is configured or configurable to monitor one or more rotating machines. Different embodiments and examples are described below using single units and computing device and memory, without restricting the embodiments/examples to such a solution. Concepts called cloud computing and virtualization may be used as well. The virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In cloud computing network devices, computing devices and/or storage devices provide shared resources. Some other technology advancements, such as Software-Defined Networking (SDN), may cause one or more of the functionalities described below to be migrated to any corresponding abstraction or apparatus or device. Therefore, all words and expressions should be interpreted broadly, and they are intended to illustrate, not to restrict, the embodiment.

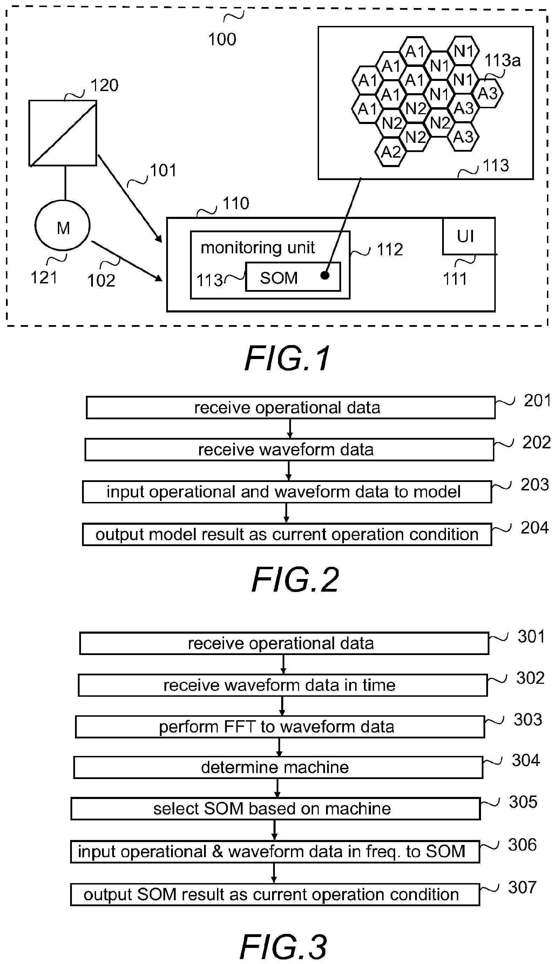

A general exemplary architecture of a system is illustrated in Figure 1. Figure 1 is a simplified system architecture only showing some devices, apparatuses and functional entities, all being logical units whose implementation and/or number may differ from what is shown. The connections shown in Figure 1 are logical connections; the actual physical connections may be different. It is apparent to a person skilled in the art that the system comprises any number of shown elements, other equipment, other functions and structures that are not illustrated. They, as well as the protocols used, are well known by persons skilled in the art and are irrelevant to the actual invention. Therefore, they need not to be discussed in more detail here.

In the embodiment illustrated in Figure 1, the system 100 comprises one or more apparatuses 110 (only one illustrated in Figure 1) configured for monitoring one or more rotating machines/machineries 120 (only one illustrated in Figure 1). The system 100 may implement Industrial Internet of Things (IIoT), in which an industrial site, i.e. a site wherein a rotating machine 120 locates, may be configured to act as an edge, and a service center, or corresponding remote center, not locating on the industrial site but locating on a remote site, may be configured as a global cloud level forming a level for central management, for example. In such an implementation, rotating machines and/or sensors measuring and/or collecting different information may be configured to send the data to the remote site. However, any other implementation, including those not utilizing IIoT, may be used as well.

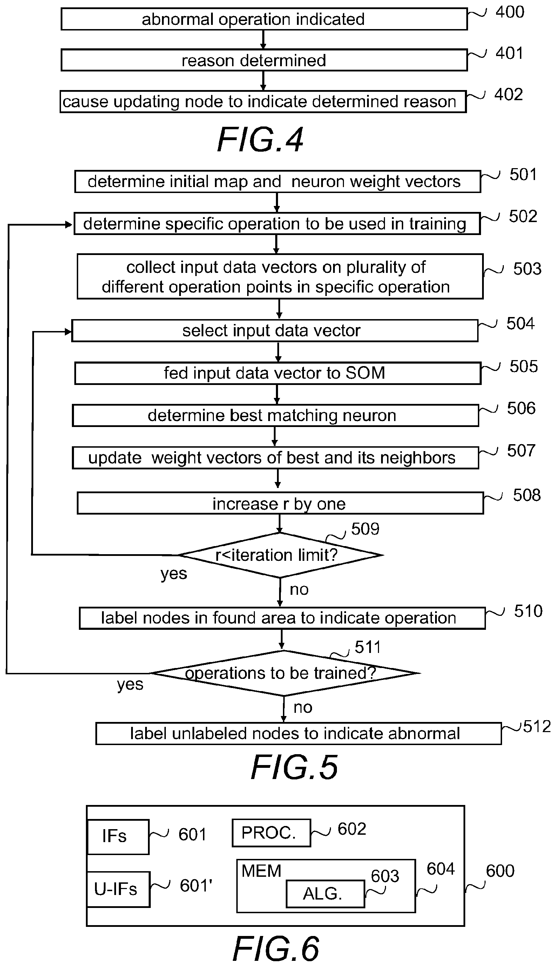

An apparatus (equipment, device) 110 configured for condition monitoring, called herein a monitoring apparatus, is a computing apparatus comprising one or more user interfaces 111 for user interaction, and a monitoring unit 112 comprising one or more trained classifying models 113 (only one shown in Figure 1) for condition monitoring. There may be, for example, a trained classifying model per a monitored rotating machine -type, and/or per a monitored rotating machine -type in a site, and/or per a monitored rotating machine and/or per an input data set. The input data set comprises both operational data and waveform data, but the operational data may be a set of different operational data or comprise one type of operational data and/or the waveform data may be a set of different waveform data or comprise one type of waveform data, as will be described in more detail below, especially with Figure 5.

A trained self-organizing map is used herein as an example of a trained classifying model without restricting the trained classifying models to trained self-organizing maps. It is a straightforward solution to use the disclosed principles to any trained/trainable classifying model. A trained self-organizing map (SOM) 113 comprises nodes, a node 113a indicating at simplest either a normal operation (N) or an abnormal operation (A), i.e. deviation from the normal operation. The normal operation and/or the abnormal operation may be trained or labeled to indicate a more detailed information. For example, in the illustrated example of Figure 1, the nodes are trained, and/or labeled to classify the input data set more precisely than mere indicating a normal or an abnormal operation. For example, the normal operation may indicate, as in the illustrated example, a stage of a process. In the illustrated example of Figure 1, two stages of normal operation, N1 and N2, are shown. The abnormal operation may be indicated by the node simply as an abnormal operation condition, or a specific kind of an abnormal operation condition, or the node may indicate a fault causing the abnormal operation. In the illustrated example of Figure 1, three abnormal operations, A1, A2 and A3, are shown. When input data to the trained self-organizing map is classified, i.e. mapped to a node, a user interface may output, for example display, the indicated state (normal/abnormal). The monitoring apparatus 110 may locate in the site where a monitored rotating machine 120 locates, or in a remote site, for example, as described above, in the service center. Further, the monitoring apparatus may be configured to perform also one or more other monitoring relating tasks. However, they bear no significance to disclosed solutions, and therefore they are not described in more detail herein.

A rotating machine 120, or machinery, is a machine controlled by a variable frequency drive (not illustrated separately in Figure 1). A non-limiting list of examples of a rotating machine 120 comprises different motors, pumps and fans. The rotating machine may comprise several components and/or be a rotating machinery comprising machines and/or devices. However, for the sake of clarity, herein term "machine" is used as covering also "machinery" and a combination of the machine and the controlling variable frequency drive.

A variable frequency drive may be used for controlling a motor speed and/or a torque of a rotating machine by varying, for example, frequency, current and/or voltage of an electrical supply to the rotating machine. The variable frequency drive may be called an adjustable-frequency drive or a variable-voltage/variable-frequency drive, or a variable speed drive, an alternating current (AC) drive, a micro drive or an inverter drive, or herein shortly a drive. The drive may be configured to collect operational data and provide the monitoring apparatus 110 with the operational data. The operational data may comprise a (current) speed and/or a (current) torque of the rotating machine. The operational data may also comprise environment data, such as temperature and/or moisture content. It should be appreciated that the rotating machine may be configured to provide the operational data to the monitoring apparatus. Yet a further alternative includes one or more sensors collecting and transmitting operational data to the monitoring apparatus, i.e. provide the monitoring apparatus with the operational data. In other words, operational data from the machine is transmitted to the monitoring apparatus 110, but the apparatus/device collecting and transmitting the operational data bears no significance.

In the illustrated example of Figure 1, there are one or more sensors 121 that are configured to collect waveform data, for example vibration data and/or noise data (acoustic data), from the machine 120, and provide the monitoring apparatus 110 with the waveform data, for example as an amplitude value in time. A sensor may transmit the waveform data to the monitoring apparatus either directly or via the drive (or via the machine 120). The term sensor covers herein also microphones.

A connection (depicted in Figure 1 by 101) for transmitting operational data and a connection (depicted in Figure 1 by 102) for transmitting waveform data may be of a same type or of a different type. The connection(s) may be direct, wired connection(s), or short range wireless connection(s), such as Bluetooth, WLAN, Li-Fi, ZigBee and near field communication, just to name some examples without limiting to those, and/or the connection(s) may be over one or more networks, wired or wireless, including cellular networks, such as 4G, 5G, and beyond, or any combination thereof. The details of the connections bear no significance and are therefore not described in detail herein.

Figures 2 and 3 describe different examples of functionalities of the monitoring apparatus, or the monitoring unit comprised in the monitoring apparatus. Further, for the sake of simplicity, in the examples below it is said that data is received from a machine, covering also solutions in which data is received from a drive and/or from one or more sensors. In the examples it is assumed that the trained classifying model has been trained using input data sets corresponding to input data that are processed in Figures 2 and 3. Training of a classifying model is discussed with Figure 5.

Referring to Figure 2, both operational data (step 201) on a machine and waveform data (step 202) on the machine are received from the machine. The received operational data and the waveform data are input (fed) in step 203 to a trained classifying model for the machine. The trained classifying model classifies the input data to either a normal operation or an abnormal operation. The thus obtained classification result is outputted in step 204 as a current operation condition (condition monitoring result). For example, the machine may be displayed in green, or nothing is indicated, as long as the result, i.e. the current operation condition indicated by the classification result of the input data, is the normal operation. When the result is the abnormal normal operation, the machine may be displayed in some other color and/or in a flashing mode, possibly labeled with additional data, and/or a sound (alarm) may be played.

The example of Figure 3 differs from the example of Figure 2 in two respects: the waveform data is received as amplitude values in time but the input data comprises the waveform data in frequency spectrum, i.e. is amplitude values in frequency, and the monitoring apparatus is configured to monitor different rotating machines. Further, in the example of Figure 3 trained self-organizing maps are used as the trained classifying model.

Referring to Figure 3, both operational data (step 301) on a machine and waveform data (step 302) on the machine are received from the machine. A Fast Fourier transformation (FFT) is performed in step 303 to the received waveform data, resulting to the waveform data being amplitude values in frequency. A machine, or a type of the machine whose data is processed is determined in step 304, for example based on wherefrom the data was received. Based on the machine, or on the type of the machine, a trained self-organizing map is selected in step 305 amongst two or more trained self-organizing maps. Then the operational data and the waveform data in frequency are input (fed) in step 203 to the selected trained self-organizing map (SOM). The trained self-organizing map maps (classifies) the received set of input data to a node, which indicates either a normal operation or an abnormal operation. The thus obtained self-organizing map result is outputted in step 307 as a current operation condition (condition monitoring result). For example, the machine may be displayed in green, or nothing is indicated, as long as the result, i.e. the current operation condition indicated by the node whereto the input data is mapped, is the normal operation. When the result is the abnormal normal operation, the machine may be displayed in some other color and/or in a flashing mode, possibly labeled with additional data, and/or a sound (alarm) may be played.

In another example, in which the monitoring apparatus comprises one trained self-organizing map, steps 304 and 305 are omitted. In a further example, in which the received waveform data is already amplitude values in frequency, or the trained self-organizing map has been trained using amplitude values in time, step 303 maybe omitted.

Further, it should be appreciated that preprocessing received data before it is input to the trained self-organizing map may be performed using another technique than the Fast Fourier transformation.

In an implementation in which the monitoring apparatus may receive different types of data sets, for example a data set comprising speed and vibration data and a data set comprising speed, torque, vibration and noise data, the type of data set may be used as one criterium to select a self-organizing map in step 305 to ensure that the input data corresponds to input data used in the training.

Figure 4 illustrates an example how the trained self-organizing map may be updated to contain more detailed indications than mere indication of state (normal/abnormal). The updating may be combined with the functionality of Figure 3. It should be appreciated that corresponding updating may be performed to nodes indicating normal operation, for example if information on a process stage is of interest, and/or if it has been determined how near to optimum operation, for example, the normal operation condition is.

Referring to Figure 4, when the received operational and waveform data results that abnormal operation (step 400) is indicated, more detailed analysis may be performed, and a reason, or a fault, that caused the abnormal operation may be determined (step 401). One or more analytics or diagnostic tools running on one or more computing device may be used in the determining and/or one or more maintenance persons in the site, for example, may determine the reason/contribute to the determining of the reason. The reason may be aging, change in surrounding environment, or a specific malfunction, without limiting the reasons to the examples given. This information may be used for updating (labeling) in step 402 the node in trained self-organizing map to indicate the determined reason. Thanks to that, next time when the input data maps to the node, the reason causing abnormal operation will be outputted, for example displayed. This in turn makes troubleshooting and possible maintenance actions faster and more efficient. Naturally it is possible to label the node to indicate normal operation, if the detailed analysis reveals that there is no deviation from the normal operation.

Figure 5 illustrates an example functionality how to train a self-organizing map. In the example it is assumed that the self-organizing map is trained to indicate a more detailed information than normal/abnormal operation. The self-organizing map is an artificial neural network that is trained using unsupervised learning to produce a low-dimensional (typically two-dimensional), discretized representation of the input space of the training samples and is therefore a method to do dimensionality reduction. Self-organizing maps apply competitive learning and use a neighborhood function to preserve the topological properties of the input space. Other examples of trainable classifying models include clustering-based models, trained using unsupervised learning, and different classifiers, trained using supervised learning. The data sets used to train a self-organizing map can be used to train also the other trainable classifying models.

Referring to Figure 5, the initial self-organizing map is determined in step 501. A non-limiting example includes a two-dimensional hexagonal 20x20 map, but naturally any other sizes and dimensions may be used. In other words, the initial self-organizing map includes at least an input layer and an output layer, the input layer comprising a plurality of neurons N1, the output layer comprising a plurality of neurons N2, each of the neurons N1 in the input layer being connected to each of the neurons N2 in the output layer in one-to-many relationship. A neuron N2 in the output layer refers to a node in the self-organizing map. During the training, an area is found, and nodes in the area indicate a trained operation condition. Hence, neurons N2 refer to nodes of the trained operation in a data space of the trained self-organizing map. Initial weight vectors of the neurons N2 are also determined (set) in step 501. For example, the weight vectors may be initialized randomly to small sample values or the weight vectors may be initialized by using eigenvectors.

Then a specific operation to be used in the training is determined in step 502. The specific operation is determined amongst different specific operation conditions for which there is training data, and such operation conditions may be processed operation by operation. For example, there may be training data for abnormal operation condition 1, abnormal operation condition 2 and for normal operation condition. In another example, there may be training data for. In a still further example, there may be training data for abnormal operation condition 1, abnormal operation condition 2, normal operation condition 1 and normal operation condition 2. In other words, the specific operation conditions may include any number of different operation conditions as long as at least one of the operation conditions is a normal operation condition. However, if the nodes are labeled to indicate either a normal or abnormal condition, step 502 (and step 511) may be skipped and the map will be trained using normal operation condition as the specific operation condition.

Then input data vectors (input data) for a machine for the specific operation are collected in step 503. To collect the input data vectors the machine is run with a plurality of different operational values (different operation points) when the machine is in the specific operation condition, and corresponding waveform data is measured. It should be appreciated that also operational values may be measured, and the measured values are then used in the input data. Accuracy of a trained self-organizing map is better if measured values of operational data are used. However, also operational settings may be used as operational data. The input data vectors may be stored to a data storage, wherefrom they are retrieved (collected), for example, or they, or part of them may be collected at the beginning of the training. Assuming that operational data comprises speed and torque values and waveform data comprises vibration data and noise data, an input data vector comprises a speed value, a torque value, vibration value(s) and noise value(s) (vibration and noise value(s) being measured when the combination of the speed value and the torque value are used). Assuming that operational data comprises speed and torque values and waveform data comprises vibration data, an input data vector comprises a speed value, a torque value and vibration value(s) (vibration value(s) being measured when the combination of the speed value and the torque value are used). Assuming that operational data comprises speed and torque value(s) and waveform data comprises noise data, an input data vector comprises a speed value, a torque value and noise value(s) (noise value(s) being measured when the combination of the speed value and the torque value are used). Assuming that operational data comprises speed values and waveform data comprises vibration data and noise data, an input data vector comprises a speed value, vibration value(s) and noise value(s) (vibration and noise value(s) being measured with the speed). Assuming that operational data comprises speed values and waveform data comprises vibration data, an input data vector comprises a speed value and vibration value(s) measured with the speed. Assuming that operational data comprises speed values and waveform data comprises noise data, an input data vector comprises a speed value and noise value(s) measured with the speed. Assuming that operational data comprises torque values and waveform data comprises vibration data and noise data, an input data vector comprises a torque value, vibration value(s) and noise value(s) (vibration and noise value(s) being measured with the torque). Assuming that operational data comprises torque values and waveform data comprises vibration data, an input data vector comprises a torque value and vibration value(s) measured with the torque. Assuming that operational data comprises torque values and waveform data comprises noise data, an input data vector comprises a torque value and noise value(s) measured with the torque. The plurality of data vectors may have been obtained by measuring vibration and/or noise at all possible speed values or torque values or possible combinations of the speed values and torque values, or at a subset of all possible values/combinations, for example at most commonly used. In other words, input data vectors are collected on a plurality of different operation points (an operation point being defined by a speed and/or a torque used).

Then the actual training for the specific condition may be performed. During the training, a plurality of iteration rounds are performed. An iteration round comprises selecting in step 504 an input data vector. The input data vector may be selected randomly amongst the whole set of plurality of input data vectors, or an input data vector may be selected amongst unselected input data vectors as long as such exist, and only after all input data vectors have been selected, all input data vectors are (again) assumed to be unselected.

The input data vector is fed (input) in step 505 to the self-organizing map undergoing the training. A best matching neuron N2 is determined in step 506 by using Euclidean distance formula for similarity between the input vector and each neuron's N2 weight vector, the best matching neuron N2 being the one having the smallest distance. Then the weight vectors of the best matching neuron N2 and its neighbor neurons are updated, as known in the art, in step 507. Then the number of iterations r is updated in step 508. If the number of iterations is smaller than a preset iteration limit (step 509: yes), the process returns to step 504 to select an input data vector. If the number of iterations r is the preset iteration limit (step 509: yes), nodes in the area found are labeled in step 510 to indicate the specific operation condition determined in step 502. Then it is checked in step 511, whether there are more specific operation conditions the map is to be trained with. If there is (step 511: yes), the process returns to step 502 to determine the specific operation condition.

If the map has been trained with all specific conditions, for example using all specific operation conditions for which there is training data (step 511: no), nodes that have not been labeled during the training are labeled in step 512 to indicate an abnormal condition. Then the trained model, i.e. the trained self-organizing map is ready to use. For example, it may be stored centrally and copies of the it may be delivered to monitoring apparatuses.

The training described above is offline training that may be performed by a dedicated training apparatus or a training unit comprised in an apparatus. However, at least when taken into use, the trained self-organizing map, or any corresponding trained classifying model may be updated by performing online training, for example by a separate training unit in the monitoring apparatus or by the monitoring unit in the monitoring apparatus, or in a server in a service center.

As can be seen from the above, expected behavior of a rotating machine can be autonomously learned for a full operating range of the machine by combining operational data, like speed and/or torque values (signals), covering a full range of expected operation conditions with corresponding waveform data, or preprocessed waveform data, like sound (noise) and/or vibration values (signals). The thus trained classifying model provides a tool for fault and abnormality diagnostics overcoming static nature of condition monitoring based on mere waveform data. The static nature means that if operation settings (operation point) remain the same, for example speed and torque are constant, audible cues and mechanical vibrations can be utilized when monitoring the operation condition, or a health, of a rotational machine. For example, in pumping systems, a cavitation can be detected from the impact caused by imploding bubbles, either as noise or as an increase in vibrations. In fans and motors, bearings may produce noise and/vibrations. In normal operation conditions the noise and/or the vibrations can be detected, when monitored, at certain frequencies. Once the bearings ages and starts to cause issue, the frequencies will deteriorate. In case of the cavitation, some frequencies that were not present at the beginning can be amplified. However, a change in speed and/or torque may cause a change in monitored frequencies, which erroneously may be determined to indicate an abnormal operation even though the operation is normal. When both the operational data and the waveform data is used for condition monitoring, probability for this kind of errors is minimized, and accuracy of the condition monitoring increases.

The steps and related functions described above in Figures 2 to 5 are in no absolute chronological order, and some of the steps may be performed simultaneously or in an order differing from the given one. Other functions can also be executed between the steps or within the steps. Some of the steps or part of the steps can also be left out or replaced by a corresponding step or part of the step.

The techniques described herein may be implemented by various means so that an apparatus implementing one or more functions/operations described above with an embodiment/example, for example by means of any of Figures 1 to 5 and any combination thereof, comprises not only prior art means, but also means for implementing the one or more functions/operations of a corresponding functionality described with an embodiment, for example by means of any of Figures 1 to 5 and any combination thereof, and it may comprise separate means for each separate function/operation, or means may be configured to perform two or more functions/operations. For example, one or more of the means and/or the monitoring unit, and/or the training unit, or any corresponding unit/subunit(s)/integrated unit comprising at least one of the units, for one or more functions/operations described above may be software and/or software-hardware and/or hardware and/or firmware components (recorded indelibly on a medium such as read-only-memory or embodied in hard-wired computer circuitry) or combinations thereof. Software codes may be stored in any suitable, processor/computer-readable data storage medium(s) or memory unit(s) or article(s) of manufacture and executed by one or more processors/computers, hardware (one or more apparatuses), firmware (one or more apparatuses), software (one or more modules), or combinations thereof. For a firmware or software, implementation can be through modules (e.g., procedures, functions, and so on) that perform the functions described herein.

Figure 6 is a simplified block diagram illustrating some units for an apparatus 600 configured for condition monitoring and/or for training and comprising the monitoring unit and/or the training unit, or any corresponding unit/subunit(s)/integrated unit comprising at least both units, or configured otherwise to perform at least some functionality described above, for example by means of any of Figures 1 to 5 and any combination thereof, or some of the functionalities if functionalities are distributed in the future. In the illustrated example, the apparatus comprises one or more interface (IF) entities 601, such as one or more user interfaces and one or more communication interfaces, one or more processing entities 602 connected to various interface entities 601, including different user interface entities 601', and to one or more memories 604.

The one or more interface entities 601, including user interface entities 601', are entities for receiving and transmitting information, such as communication interfaces comprising hardware and/or software for realizing communication connectivity according to one or more communication protocols, or for realizing data storing and fetching (obtaining, retrieving), or for providing user interaction via one or more user interfaces. The one or more user interfaces may be any kind of a user interface, for example a screen, a keypad, or an integrated display device or external display device.

A processing entity 602 is capable to perform calculations and configured to implement at least the monitoring unit, and/or the training unit, or any corresponding unit/subunit(s)/integrated unit comprising at least both units, described herein, or at least part of functionalities/operations described above, for example by means of any of Figures 1 to 5 and any combination thereof, as a corresponding unit or a sub-unit if a distributed scenario is implemented, with corresponding algorithms 603 stored in the memory 604. The entity 602 may include a processor, controller, control unit, micro-controller, unit, module, etc. suitable for carrying out embodiments or operations described above, for example by means of any of Figures 1 to 5 and any combination thereof. Generally the processor is a central processing unit, but the processor may be an additional operation processor.

A memory 604 is usable for storing a computer program code required for the monitoring unit, and/or the training unit, or any corresponding unit/subunit(s)/integrated unit comprising at least both units, or for one or more functionalities/operations described above, for example by means of any of Figures 1 to 5 and any combination thereof, i.e. the algorithms for implementing the functionality/operations described above by means of any of Figures 1 to 5 and any combination thereof. The memory 604 may also be usable for storing one or more trained classifying models, possibly with additional information, like machine type and/or input data set types, and other possible information.

The algorithms 603 are software code, i.e. instructions, forming at least one portion of a computer program. The computer program may be in source code form, object code form, or in some intermediate form, and it may be stored in some sort of carrier, which may be any entity or device capable of carrying the program. For example, the computer program may be stored on a computer program distribution medium readable by a computing device or a processor. The computer program medium may be, for example but not limited to, an electrical carrier signal, software distribution package, or a non-transitory medium, for example. Coding of software for carrying out the embodiments as shown and described is well within the scope of a person of ordinary skill in the art.

As a summary, the monitoring unit, and/or the training unit, or any corresponding unit/subunit(s)/integrated unit comprising at least both units and/or algorithms for functions/operations described herein, for example by means of means of any of Figures 1 to 5 and any combination thereof, may be configured as a computer or a processor, or a microprocessor, such as a single-chip computer element, or as a chipset, or one or more logic gates including at least a memory for providing storage area used for arithmetic operation and an operation processor for executing the arithmetic operation. The monitoring unit, and/or the training unit, or any corresponding unit/subunit(s)/integrated unit comprising at least both units and/or algorithms for functions/operations described above, for example by means of means of any of Figures 1 to 5 and any combination thereof, may comprise one or more computer processors, application-specific integrated circuits (ASIC), digital signal processors (DSP), digital signal processing devices (DSPD), programmable logic devices (PLD), field-programmable gate arrays (FPGA), graphics processing units (GPU), and/or other hardware components that have been programmed and/or will be programmed by downloading computer program code (one or more algorithms) in such a way to carry out one or more functions of one or more embodiments/examples.

An embodiment provides a computer program embodied on any client-readable distribution/data storage medium or memory unit(s) or article(s) of manufacture, comprising program instructions executable by one or more processors/computers, which instructions, when loaded into an apparatus, constitute the monitoring unit, and/or the training unit, or any corresponding unit/subunit(s)/integrated unit comprising at least both units or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the units/sub-units and/or the algorithms for one or more functions/operations described above, for example by means of means of any of Figures 1 to 5 and any combination thereof, may be an element that comprises one or more arithmetic logic units, a number of special registers and control circuits.

It will be obvious to a person skilled in the art that, as technology advances, the inventive concept can be implemented in various ways. The invention and its embodiments are not limited to the examples described above but may vary within the scope of the claims.

## Claims

1. A computer implemented method for condition monitoring of a rotating machine, the method comprising:
receiving operational data on the rotating machine;
receiving waveform data on the rotating machine;
inputting both the operational data and the waveform data as input data to a trained classifying model, which classifies the input data to a normal operation or to an abnormal operation, wherein the classifying model has been trained using a plurality of combinations of operational data and waveform data collected in different operation settings; and
outputting the operation, to which the input data is classified, as current operation condition of the rotating machine.

2. A computer implemented method as claimed in claim 1, further comprising:
performing to the waveform data received a Fast Fourier transformation before inputting the waveform data to the trained classifying model.

3. A computer implemented method as claimed in claim 1 or 2, further comprising:
maintaining in a memory two or more trained classifying models;
selecting a trained classifying model where to input received data at least based on the rotating machine.

4. A computer implemented method as claimed in claim 1, 2 or 3, wherein the trained classifying model is a self-organizing map comprising nodes indicating a normal operation and nodes indicating an abnormal operation, the self-organizing map classifying the input data by mapping the input data to one of the nodes.

5. A computer implemented method according to claim 4, further comprising:
determining, in response to the indicated operation of the node being an abnormal operation, a reason causing a deviation to a normal operation;
labeling the node in the trained self-organizing map to indicate the reason.

6. A computer implemented method comprising:
determining an initial self-organizing map with initial weight vectors;
determining a specific operation amongst one or more specific operations the self-organizing map is to be trained with;
collecting input data vectors comprising plurality of operational data of a rotating machine in the specific operation and plurality of corresponding waveform data of the rotating machine, an input data vector comprising operational data used and waveform data measured when the operational data has been in use;
inputting one or more input data vectors to the self-organizing map;
updating the weight factors by determining a best matching node for an input data vector;
training the self-organizing map by repeating the inputting and updating until a preset iteration limit has been reached;
labelling nodes in an area, which is found during the training, to indicate a specific operation condition corresponding to the specific operation;
repeating the determining the specific operation, the collecting and the training as long as there are specific operations the self-organizing map is to be trained with; and
storing the trained self-organizing map for use as a classifying trained model.

7. A computer implemented method according to claim 6, wherein the one or more specific operations are normal operations, and the method further comprises labeling nodes outside corresponding found one or more areas to indicate abnormal operation condition.

8. A computer implemented method according to any preceding claim, wherein the operational data comprises speed data and/or torque data and the waveform data comprises vibration data and/or noise data.

9. A computer program comprising program instructions which, when run by a computing apparatus, cause the computing apparatus to carry out a method according to any preceding claim.

10. A computer readable medium comprising program instructions for causing a computing apparatus to carry out a method according to any preceding claim 1 to 8.

11. An apparatus for monitoring a rotating machine, the apparatus comprising:
means for receiving operational data on the rotating machine;
means for receiving waveform data on the rotating machine;
means for inputting both the operational data and the waveform data as input data to a trained classifying model, which is configured to classify the input data to a normal operation or to an abnormal operation, wherein the classifying model has been trained using a plurality of combinations of operational data and waveform data collected in different operation settings; and
means for outputting the operation, to which the input data is classified, as current operation condition of the rotating machine.

12. An apparatus according to claim 1, further comprising means for carrying out a method according to claim 2, 3, 4, 5, 6, 7 or 8.

13. A system comprising
one or more rotating machines; and
one or more apparatuses configured to perform a method according to any of claims 1 to 8.

14. A system according to claim 13, the system further comprising one or more sensors configured to measure waveform data on a rotating apparatus and to send the waveform data to an apparatus.

15. A system according to claim 13 or 14, the system further comprising one or more drives, wherein a drive is configured to control a rotating machine and send operational data on the rotating machine to an apparatus.
